# EUROPEAN PATENT APPLICATION

(11) **EP 1 686 578 A2**
(43) Date of publication of application: **02.08.2006**
(21) Application number: 06250488.1
(22) Date of filing: 30.01.2006
(51) Int. Cl.: G11B 20/00

(54) **Data processing circuit, reproduction apparatus, data processing method, reproduction method, storage medium in which data processing program is stored, and storage medium in which reproduction program is stored**

(30) Priority: 31.01.2005 JP 2005024357
(71) Applicant: SONY CORPORATION, Tokyo 141 (JP)
(72) Inventor: Oishi, Tsurayuki, Sony Corporation, Tokyo 141 (JP); Koike, Takashi, Sony Corporation, Tokyo 141 (JP); Ezura, Yuichi, Sony Corporation, Tokyo 141 (JP); Nagano, Motohiko, Sony Corporation, Tokyo 141 (JP)
(74) Representative: Leppard, Andrew John

(57) **Abstract**

A data processing circuit and method which can process content data in an enhanced efficiency is disclosed. A right information processing section produces, based on utilization right information which indicates a utilization right of content data, key data to be used for a data process of the content data and adds a use object of the key data for utilizing the content data to the produced key data to produce processing use information. A temporary storage section temporarily stores the processing use information. A data processing section compares control information supplied from the outside and the use object included in the processing use information temporarily stored in the temporary storage section and performs, in response to a result of the comparison, a data process for the content data using the key data included in the processing use information.

## Description

This invention relates to a data processing circuit, a reproduction apparatus, a data processing method, a reproduction method, a storage medium in which a data processing program is stored and a storage medium in which a reproduction program is stored. Embodiments of the present invention relate to a recording and reproduction apparatus which records and reproduces music data and also to a data processing circuit provided in a reproduction apparatus such as a personal computer and a music reproduction apparatus.

A data providing system in related art, a content provider encrypts content data with content key data and encrypts the content key data with key data for distribution. Then, the content provider supplies a secure container in which the encrypted content data and the encrypted content key data are placed to a user home network.

Meanwhile, network apparatus and A/V apparatus in the user home network decrypt the encrypted content key data in the secure container using the key data for distribution by means of an SAM (Secure Application Module) provided therein. Then, the network apparatus and A/V apparatus signal the content key data obtained by the SAM to a decryption and decompression module together with the encrypted content data. Thus, the decryption and decompression module decrypts and decompresses the encrypted content data using the content key data. A data providing system of the type described is disclosed, for example, in Japanese Patent Laid-Open No. 2001-22271 (pp.19 to 20, FIG. 10), this corresponds to European Published Patent No. EP1120715 A1.

Incidentally, when network apparatus and A/V apparatus having such a configuration as described above reproduce a plurality of content data, they successively execute a decryption process of encrypted content key data with key data for distribution and another decryption process of encrypted content data with content key data alternately and repetitively. However, in such network apparatus and A/V apparatus, after the decryption process for one encrypted content data is completed, while succeeding new encrypted content key data is processed for decryption, new encrypted content data corresponding to the encrypted content key data is kept to wait for a decryption process. Therefore, the network apparatus and A/V apparatus have a problem in that they are low in processing efficiency.

It is desirable to provide a data processing circuit which can process content data in an enhanced efficiency.

Aspects of the present invention are set out in the claims.

According to an embodiment of the present invention, there is provided a data processing circuit including a right information processing section configured to produce, based on utilization right information which indicates a utilization right of content data, key data to be used for a data process of the content data and adding a use object of the key data for utilizing the content data to the produced key data to produce processing use information, a temporary storage section configured to temporarily store the processing use information, and a data processing section configured to compare control information supplied from the outside and the use object included in the processing use information temporarily stored in the temporary storage section and perform, in response to a result of the comparison, a data process for the content data using the key data included in the processing use information.

In the data processing circuit, where a plurality of content data are to be processed, since processing use information can be temporarily stored in the temporary storage section, while the right information processing section produces processing use information, the data processing section can successively perform the data processes for the plurality of content data continuously without waiting at all during production of processing use information. Further, in the data processing circuit, since key data is temporarily stored as processing use information to which a use object is added into the temporary storage section, even where a plurality of pieces of processing use information are temporarily stored into the temporary storage section, such a situation that a mismatch occurs with the key data to be used for the data processes of the content data can be prevented substantially with certainty. As a result, such a situation that a processing result different from a processing result which should originally be obtained is obtained as a result of the data processes and the data processes prove fruitless can be prevented. Further, in the data processing circuit, since such a situation that a mismatch occurs with the key data to be used for the data processes of the content data can be prevented substantially with certainty, even if a request to use key data, which is used for original data processes, in different data processes having different processing substances is issued by a third party from the outside, also processing in error and illegal utilization of the content data according to the request can be prevented with certainty.

According to another embodiment of the present invention, there is provided a reproduction apparatus including a control section, a data processing circuit including a right information processing section configured to produce, based on utilization right information which indicates a utilization right of content data, key data to be used for a data process of the content data and adding a use object of the key data for utilizing the content data to the produced key data to produce processing use information, a temporary storage section configured to temporarily store the processing use information, and a data processing section configured to compare control information supplied from the control section and the use object included in the processing use information temporarily stored in the temporary storage section and perform, in response to a result of the comparison, a data process for the content data using the key data included in the processing use information, and a reproduction section configured to reproduce the content data processed by and outputted from the data processing circuit.

In the reproduction apparatus, where a plurality of content data are to be processed by the data processing circuit, since processing use information can be temporarily stored in the temporary storage section, while the right information processing section produces processing use information, the data processing section can successively perform the data processes for the plurality of content data continuously without waiting at all during production of processing use information. Further, in the reproduction apparatus, since key data is temporarily stored as processing use information to which a use object is added into the temporary storage section by the data processing circuit, even where a plurality of pieces of processing use information are temporarily stored into the temporary storage section, such a situation that a mismatch occurs with the key data to be used for the data processes of the content data can be prevented substantially with certainty. As a result, such a situation that a processing result different from a processing result which should originally be obtained is obtained as a result of the data processes and the succeeding reproduction process and the data processes and the reproduction process prove fruitless can be prevented as well. Further, in the reproduction apparatus, since such a situation that a mismatch occurs with the key data to be used for the data processes of the content data can be prevented substantially with certainty, even if a request to use key data, which is used for original data processes, in different data processes having different processing substances is issued by a third party from the outside, also processing in error and illegal utilization of the content data according to the request can be prevented with certainty.

According to a further embodiment of the present invention, there is provided a data processing method including a right information processing step of producing, based on utilization right information which indicates a utilization right of content data, key data to be used for a data process of the content data and adding a use object of the key data for utilizing the content data to the produced key data to produce processing use information, a temporary storage step of temporarily storing the processing use information, and a data processing step of comparing control information supplied from the outside and the use object included in the temporarily stored processing use information temporarily and performing, in response to a result of the comparison, a data process for the content data using the key data included in the processing use information.

In the data processing method, where a plurality of content data are to be processed, since processing use information can be temporarily stored, while the processing use information is produced, the data processes can be successively performed for the plurality of content data continuously without waiting at all during production of the processing use information. Further, in the data processing method, since key data is temporarily stored as processing use information to which a use object is added, even where a plurality of pieces of processing use information are temporarily stored, such a situation that a mismatch occurs with the key data to be used for the data processes of the content data can be prevented substantially with certainty. As a result, such a situation that a processing result different from a processing result which should originally be obtained is obtained as a result of the data processes and the data processes prove fruitless can be prevented. Further, in the data processing method, since such a situation that a mismatch occurs with the key data to be used for the data processes of the content data can be prevented substantially with certainty, even if a request to use key data, which is used for original data processes, in different data processes having different processing substances is issued by a third party from the outside, also processing in error and illegal utilization of the content data according to the request can be prevented with certainty.

According to a still further embodiment of the present invention, there is provided a reproduction method including a right information processing step of causing, from within a data processing circuit including a right information processing section configured to produce, based on utilization right information which indicates a utilization right of content data, key data to be used for a data process of the content data and adding a use object of the key data for utilizing the content data to the produced key data to produce processing use information, a temporary storage section configured to temporarily store the processing use information, and a data processing section configured to compare control information supplied from a control section and the use object included in the processing use information temporarily stored in the temporary storage section and perform, in response to a result of the comparison, a data process for the content data using the key data included in the processing use information, the right information processing section to produce the key data based on the utilization right information of the content data and add the use object to the produced key data to produce the processing use information, a temporary storage step of causing the data processing circuit to temporarily store the processing use information into the temporary storage section, a data processing step of signaling the control information to the data processing circuit to cause the data processing section to compare the control information and the use object included in the processing use information temporarily stored in the temporary storage section with each other and perform, in response to a result of the comparison, a data process for the content data using the key data included in the processing use information, and a reproduction step of reproducing the content data processed by and outputted from the data processing circuit.

In the reproduction method, where a plurality of content data are to be processed by the data processing circuit, since processing use information can be temporarily stored in the temporary storage section, while the right information processing section produces processing use information, the data processing section can successively perform the data processes for the plurality of content data continuously without waiting at all during production of processing use information. Further, in the reproduction apparatus, since key data is temporarily stored as processing use information to which a use object is added into the temporary storage section by the data processing circuit, even where a plurality of pieces of processing use information are temporarily stored into the temporary storage section, such a situation that a mismatch occurs with the key data to be used for the data processes of the content data can be prevented substantially with certainty. As a result, such a situation that a processing result different from a processing result which should originally be obtained is obtained as a result of the data processes and the reproduction process and the data processes and the reproduction process prove fruitless can be prevented as well. Further, in the reproduction apparatus, since such a situation that a mismatch occurs with the key data to be used for the data processes of the content data can be prevented substantially with certainty, even if a request to use key data, which is used for original data processes, in different data processes having different processing substances is issued by a third party from the outside, also processing in error and illegal utilization of the content data according to the request can be prevented with certainty.

According to a yet further embodiment of the present invention, there is provided a storage medium in or on which a data processing program is stored, the data processing program causing a data processing circuit to execute a right information processing step of producing, based on utilization right information which indicates a utilization right of content data, key data to be used for a data process of the content data and adding a use object of the key data for utilizing the content data to the produced key data to produce processing use information, a temporary storage step of temporarily storing the processing use information, and a data processing step of comparing control information supplied from the outside and the use object included in the temporarily stored processing use information temporarily and performing, in response to a result of the comparison, a data process for the content data using the key data included in the processing use information.

In the data processing program of the storage medium, where a plurality of content data are to be processed by the data processing circuit, since processing use information can be temporarily stored, while the processing use information is produced, the data processes can be successively performed for the plurality of content data continuously without waiting at all during production of the processing use information. Further, in the data processing program, since the data processing circuit temporarily stores key data as processing use information to which a use object is added, even where a plurality of pieces of processing use information are temporarily stored, such a situation that a mismatch occurs with the key data to be used for the data processes of the content data can be prevented substantially with certainty. As a result, such a situation that a processing result different from a processing result which should originally be obtained is obtained as a result of the data processes and the data processes prove fruitless can be prevented. Further, in the data processing program, since such a situation that a mismatch occurs with the key data to be used for the data processes of the content data can be prevented substantially with certainty by the data processing circuit, even if a request to use key data, which is used for original data processes, in different data processes having different processing substances is issued by a third party from the outside, also processing in error and illegal utilization of the content data according to the request can be prevented with certainty by the data processing circuit.

According to an additional embodiment of the present invention, there is provided a storage medium in or on which a reproduction program is stored, the reproduction program causing a reproduction apparatus to execute a right information processing step of causing, from within a data processing circuit including a right information processing section configured to produce, based on utilization right information which indicates a utilization right of content data, key data to be used for a data process of the content data and adding a use object of the key data for utilizing the content data to the produced key data to produce processing use information, a temporary storage section configured to temporarily store the processing use information, and a data processing section configured to compare control information and the use object included in the processing use information temporarily stored in the temporary storage section and perform, in response to a result of the comparison, a data process for the content data using the key data included in the processing use information, the right information processing section to produce the key data based on the utilization right information of the content data and add the use object to the produced key data to produce the processing use information, a temporary storage step of causing the data processing circuit to temporarily store the processing use information into the temporary storage section, a data processing step of signaling the control information to the data processing circuit to cause the data processing section to compare the control information and the use object included in the processing use information temporarily stored in the temporary storage section with each other and perform, in response to a result of the comparison, a data process for the content data using the key data included in the processing use information, and a reproduction step of reproducing the content data processed by and outputted from the data processing circuit.

In the reproduction program of the storage medium, where a plurality of content data are to be processed by the data processing circuit in the reproduction apparatus, since processing use information can be temporarily stored in the temporary storage section, while the right information processing section produces processing use information, the data processing section can successively perform the data processes for the plurality of content data continuously without waiting at all during production of processing use information. Further, in the reproduction program, since key data is temporarily stored as processing use information to which a use object is added into the temporary storage section by the data processing circuit, even where a plurality of pieces of processing use information are temporarily stored into the temporary storage section, such a situation that a mismatch occurs with the key data to be used for the data processes of the content data can be prevented substantially with certainty. As a result, such a situation that a processing result different from a processing result which should originally be obtained is obtained as a result of the data processes and the succeeding reproduction process and the data processes and the reproduction process prove fruitless can be prevented as well. Further, in the reproduction program, since such a situation that a mismatch occurs with the key data to be used for the data processes of the content data can be prevented substantially with certainty by the data processing circuit in the reproduction apparatus, even if a request to use key data, which is used for original data processes, in different data processes having different processing substances is issued by a third party from the outside, also processing in error and illegal utilization of the content data according to the request can be prevented with certainty.

In summary, with the data processing circuit, the data processing method and the storage medium in or on which the data processing program is stored, the data processing circuit may produce, based on utilization right information which indicates a utilization right of content data, key data to be used for a data process of the content data and adds a use object of the key data for utilizing the content data to the produced key data to produce processing use information. Thereafter, the data processing circuit may temporarily store the produced processing use information and compares control information supplied from the outside and the use object included in the temporarily stored processing use information. Then, the data processing circuit may perform, in response to a result of the comparison, a data process for the content data using the key data included in the processing use information. Therefore, where a plurality of content data are to be processed, while processing use information is produced, data processes can be successively performed for the plurality of content data continuously without waiting at all during production of the processing use information. Further, even where a plurality of pieces of processing use information are temporarily stored, such a situation that a mismatch occurs with key data to be used for the data processes of the content data can be prevented substantially with certainty. As a result, such a situation that a processing result different from a processing result which should originally be obtained is obtained as a result of the data processes and the data processes prove fruitless can be prevented. Further, even if a request to use key data, which is used for original data processes, in different data processes having different processing substances is issued by a third party from the outside, also processing in error and illegal utilization of the content data according to the request can be prevented with certainty. Consequently, the processing efficiency for content data can be enhanced.

Further, with the reproduction apparatus, the reproduction method and the storage medium in or on which the reproduction program is stored, the data processing circuit of the reproduction apparatus may produce, based on utilization right information which indicates a utilization right of content data, key data to be used for a data process of the content data and adds a use object of the key data for utilizing the content data to the produced key data to produce processing use information. Thereafter, the data processing circuit may temporarily store the produced processing use information and compares control information supplied from the control section and the use object included in the processing use information temporarily stored in the temporary storage section. Then, the data processing circuit may perform, in response to a result of the comparison, a data process for the content data using the key data included in the processing use information, and reproduces the content data processed by and outputted from the data processing circuit. Therefore, where a plurality of content data are to be processed, while processing use information is produced, data processes can be successively performed for the plurality of content data continuously without waiting at all during production of the processing use information. Further, even where a plurality of pieces of processing use information are temporarily stored, such a situation that a mismatch occurs with key data to be used for the data processes of the content data can be prevented substantially with certainty. As a result, such a situation that a processing result different from a processing result which should originally be obtained is obtained as a result of the data processes and the succeeding reproduction process and the data processes and the reproduction process prove fruitless can be prevented as well. Further, even if a request to use key data, which is used for original data processes, in different data processes having different processing substances is issued by a third party from the outside, also processing in error and illegal utilization of the content data according to the request can be prevented with certainty. Consequently, the processing efficiency for content data can be enhanced.

Further particular and preferred aspects of the present invention are set out in the accompanying independent and dependent claims. Features of the dependent claims may be combined with features of the independent claims as appropriate, and in combinations other than those explicitly set out in the claims.

The present invention will be described further, by way of example only, with reference to preferred embodiments thereof as illustrated in the accompanying drawings, in which:
FIG. 1 is a block diagram showing a circuit configuration of a recording and reproduction apparatus according to an embodiment of the present invention;
FIG. 2 is a block diagram showing a circuit configuration of a data processing circuit shown in FIG. 1;
FIG. 3 is a view illustrating a key use object for key data used in the recording and reproduction apparatus of FIG. 1;
FIG. 4 is a view illustrating a configuration of a coordination table for key confirmation used in the recording and reproduction apparatus of FIG. 1;
FIG. 5 is a sequence chart illustrating a data recording and reproduction process sequence in the recording and reproduction apparatus of FIG. 1;
FIG. 6 is a sequence chart illustrating a data recording and reproduction process sequence in the recording and reproduction apparatus of FIG. 1; and
FIG. 7 is a sequence chart illustrating a data recording and reproduction process sequence in the recording and reproduction apparatus of FIG. 1.

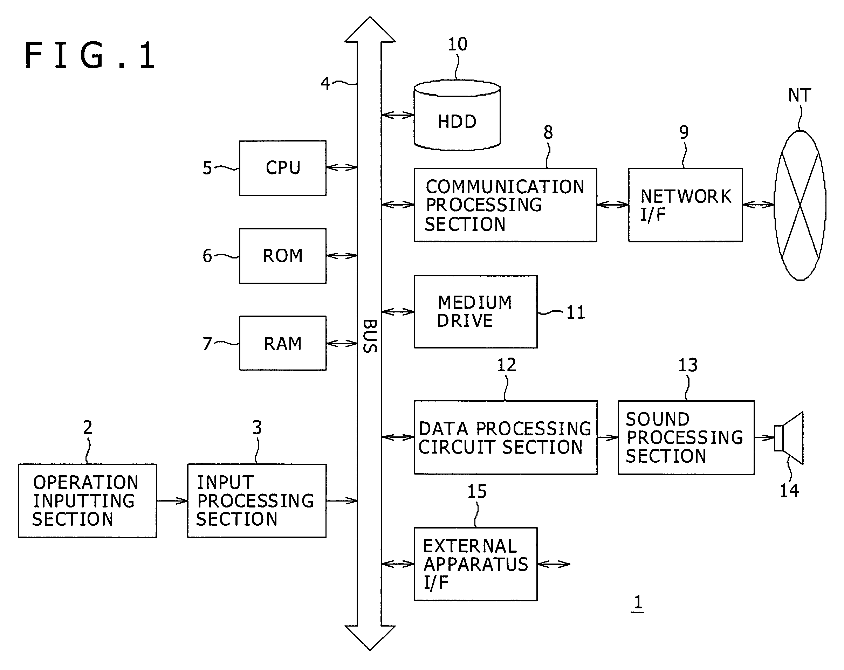

Referring first to FIG. 1, there is shown a recording and reproduction apparatus to which the present invention is applied. The recording and reproduction apparatus is generally denoted by 1 and includes an operation input section 2 which in turn includes various operation buttons (not shown) provided on a surface of a housing (not shown) of the recording and reproduction apparatus 1 or on a remote controller (not shown). If the operation input section 2 is operated by a user, then the operation by the user is recognized by the operation input section 2, and an operation input signal is signaled in response to the operation to an input processing section 3. The input processing section 3 performs a predetermined process for the operation input signal supplied thereto to convert the operation input signal into an operation command and supplies the operation command to a Central Processing Unit (CPU) 5 through a bus 4.

The central processing unit 5 reads out various programs such as a basic program, a recording and reproduction program and so forth stored in advance in a ROM (Read Only Memory) 6 or a hard disk drive 10 to a RAM (Random Access Memory) 7 through the bus 4. Then, the central processing unit 5 controls the allover apparatus in accordance with the various programs and executes a predetermined calculation process and various processes in response to operation commands supplied thereto from the input processing section 3.

Thus, the central processing unit 5 can establish a connection to a network NT successively through a communication processing section 8 and a network interface 9 and can access a tune providing server (not shown) on the network NT. In this instance, the tune providing server stores a great number of music data for music distribution as encrypted music data obtained by encrypting the music data with predetermined key data after a compression coding process. Further, the tune providing server also stores utilization right information which indicates the utilization right for each of the music data for music distribution and which is coordinated with corresponding encrypted music data. It is to be noted that the music data for music distribution are compressed and coded with a compression coding system such as the ATRAC3 (Adaptive Transform Acoustic Coding 3), AAC (Advanced Audio Coding), WMA (Windows Media Audio), RealAUDIO G2 Music Codec, MP3 (MPEG Audio Layer-3) system or the like. Further, the utilization right information includes identification information unique to corresponding music data, utilization condition information which indicates utilization conditions such as a number of times or a period of time by or for which reproduction is permitted and a number of times by which copy is permitted and so forth, utilization area information which indicates an area wherein the music data can be utilized, key source data necessary for producing key data for encrypting and decrypting corresponding music data and producing key data for decryption, electronic signature information used for detection of whether or not the utilization right information is falsified and so forth.

Accordingly, if an operation input signal indicative of a request for distribution of a desired tune is inputted by the user through the operation inputting section 2, then the central processing unit 5 accesses the tune providing server in response to the input to request for distribution of the desired tune. As a result, the central processing unit 5 fetches encrypted music data of the desired tune and corresponding utilization right information distributed from the tune providing server successively through the network interface 9 and the communication processing section 8. Then, the central processing unit 5 signals the encrypted music data and corresponding utilization right information to the hard disk drive 10. Consequently, the encrypted music data and utilization right information are recorded on a hard disk of the hard disk drive 10 in a coordinated relationship with each other for each of tunes.

A medium drive 11 is configured such that a recording medium such as a CD (Compact Disk) or the like can be reproduced under the control of the central processing unit 5. In this instance, one or plural music data corresponding to a tune are recorded as compression coded music data obtained by performing compression coding by such a predetermined compression coding system as described above on the recording medium. The medium drive 11 reads out, under the control of the central processing unit 5, the compression coded music data from the recording medium and signals the read out compression coded music data to a data processing circuit 12. At this time, the central processing unit 5 produces utilization right information corresponding to the compression coded music data read out from the recording medium and signals the produced utilization right information to the data processing circuit 12. It is to be noted that the utilization right information includes identification information unique to the corresponding compression coded music data, utilization condition information which indicates a utilization condition selected in advance, utilization area information, key source data representing a source for production of key data for encryption and decryption of the corresponding compression coded music data, electronic signature information used for detection of whether or not the utilization right information is falsified, and so forth.

The data processing circuit 12 produces key data to be used for encryption when compression coded music data is recorded based on the key source data included in the utilization right information received from the central processing unit 5. Then, the data processing circuit 12 encrypts the compression coded music data signaled from the medium drive 11 using the key data to produce encrypted music data. Thus, the central processing unit 5 signals the encrypted music data produced by the data processing circuit 12 to the hard disk drive 10 together with the corresponding utilization right information. Consequently, the hard disk drive 10 records the encrypted music data and the utilization right information signaled from the data processing circuit 12 in a coordinated relationship with each other for each of tunes on the hard disk in the inside thereof.

Incidentally, if encrypted music data in the hard disk drive 10 is designated by the user through the operation input section 2 and an operation inputting signal indicative of a request for reproduction of the designated encrypted music data is inputted, then the central processing unit 5 reads out, in response to the input, the designated encrypted music data and corresponding utilization right information from the hard disk drive 10 and signals the read out data to the data processing circuit 12. Further, at this time, the central processing unit 5 reads out also the encrypted music data itself designated by the user from the hard disk drive 10 and signals the read out data to the data processing circuit 12. At this time, the data processing circuit 12 produces key data to be used for decryption when the encrypted music data is reproduced based on the key source data included in the utilization right information. Then, the data processing circuit 12 decrypts the corresponding encrypted music data read out from the hard disk drive 10 using the produced key data to produce compression coded music data. Further, the data processing circuit 12 performs a decompression process for the compression coded music data and signals the obtained music data to a sound processing section 13.

The sound processing section 13 performs a sound process such as a digital to analog conversion process, an amplification process and so forth for the music data received from the data processing circuit 12 and signals an obtained music signal to a speaker 14. Consequently, the sound processing section 13 can output music based on the music signal from the speaker 14 so that the user can enjoy the outputted music.

An external apparatus interface 15 is an interface for allowing the central processing unit 5 to communicate with an external apparatus (not shown) such as a portable reproduction apparatus. If encrypted music data in the hard disk drive 10 is designated and an operation input signal indicative of a requesting for transfer of the designated encrypted music data to an external apparatus is inputted through the operation inputting section 2 by the user, then the central processing unit 5 reads out utilization right information corresponding to the designated encrypted music data from the hard disk drive 10 in accordance with the request and signals the utilization right information to the data processing circuit 12. Further, the central processing unit 5 reads out also the encrypted music data itself designated by the user from the hard disk drive 10 and signals the encrypted music data to the data processing circuit 12.

The data processing circuit 12 produces key data to be used for decryption upon conversion of the compression coding format of encrypted music data of an object of transfer based on key source data included in the utilization right information. The data processing circuit 12 further produces key data to be used for re-encryption of the encrypted music data of the object of transfer after the conversion of the compression coding format. Incidentally, the key data for decryption is same as key data to be used upon reproduction of the encrypted music data described above. Further, the key data for re-encryption is used to allow an external apparatus to decrypt the encrypted music data after the conversion of the compression coding format. The data processing circuit 12 thus uses the key data for decryption to decrypt the corresponding encrypted music data of an object of transfer read out from the hard disk drive 10 once and decompresses the resulting compressed coded music data to produce music data. Then, the data processing circuit 12 compression codes the music data in accordance with a predetermined coding system employed in the external apparatus to produce compression coded music data. In this instance, the data processing circuit 12 converts the compression coding format for recording of the encrypted music data of the object of transfer on a hard disk into another compression coding format which allows a reproduction process of the data by the external apparatus. Then, the data processing circuit 12 uses the key data for re-encryption to encrypt the compression coded music data to produce encrypted music data. As a result, the central processing unit 5 transfers the encrypted music data having the compression coding format converted by the data processing circuit 12 to the external apparatus through the external apparatus interface 15 so as to be recorded by the external apparatus. Consequently, the central processing unit 5 not only can reproduce music, which has been fetched as encrypted music data or compression coded music data from a tune providing server, on the network NT or a recording medium only on the recording and reproduction apparatus 1 so as to be enjoyed by the user but also can reproduce the music also on the external apparatus so as to be enjoyed by the user.

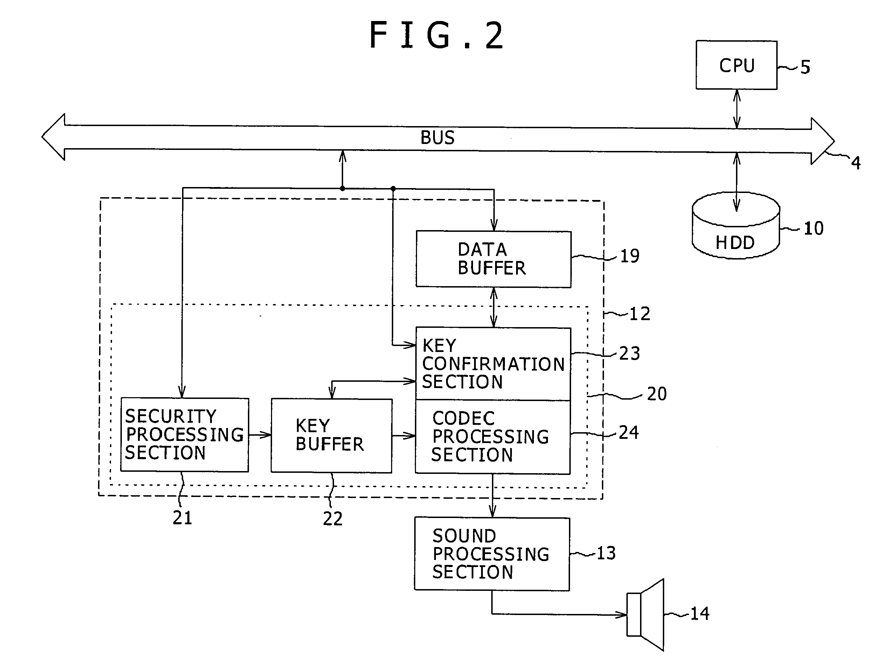

Referring now to FIG. 2, the data processing circuit 12 is formed as a circuit board on which IC (Integrated Circuit) chips which construct a data buffer memory 19 having a FIFO (First-In First-Out) configuration for temporarily storing encrypted music data and compression coded music data, and a DSP (Digital Signal Processor) 20. In this instance, the DSP 20 of the data processing circuit 12 actually executes an information process in which utilization information is used and data processes including an encryption process and a decryption process for encrypted music data and compression coded music data, and a compression coding process and a decompression process (the encryption process, decryption process, compression coding process and decompression process are hereinafter referred to collectively as code processes) in accordance with the data processing program stored in advance in an internal memory of the DSP 20. However, in the following description, the functions of the DSP 20 (that is, the functions which can be executed in accordance with the data processing program) are described as processes of functional blocks (that is, a security processing section 21, a key buffer memory 22 of a FIFO configuration for temporarily storing key data, a key confirmation section 23 and a codec processing section 24).

When the central processing unit 5 tries to cause the data processing circuit 12 to perform codec processes for encrypted music data or compression coded music data, prior to the codec processes, the central processing unit 5 signals processing substance notification information representative of the substance of the processes and utilization right information produced by the central processing unit 5 itself or read out from the hard disk drive 10 to the security processing section 21. Incidentally, as the substance of the processes indicated by the processing substance notification information, for example, four processes are available including a "encryption process for data recording" to be performed upon recording of compression coded music data, a "decryption and decompression process for data reproduction" to be performed upon reproduction of encrypted music data, a "decryption and decompression process for format conversion" to be performed upon conversion of the compression coding format of encrypted music data of an object of transfer and a "compression coding and re-encryption process for format conversion" to be performed upon conversion of the compression coding format of encrypted music data of the object of transfer.

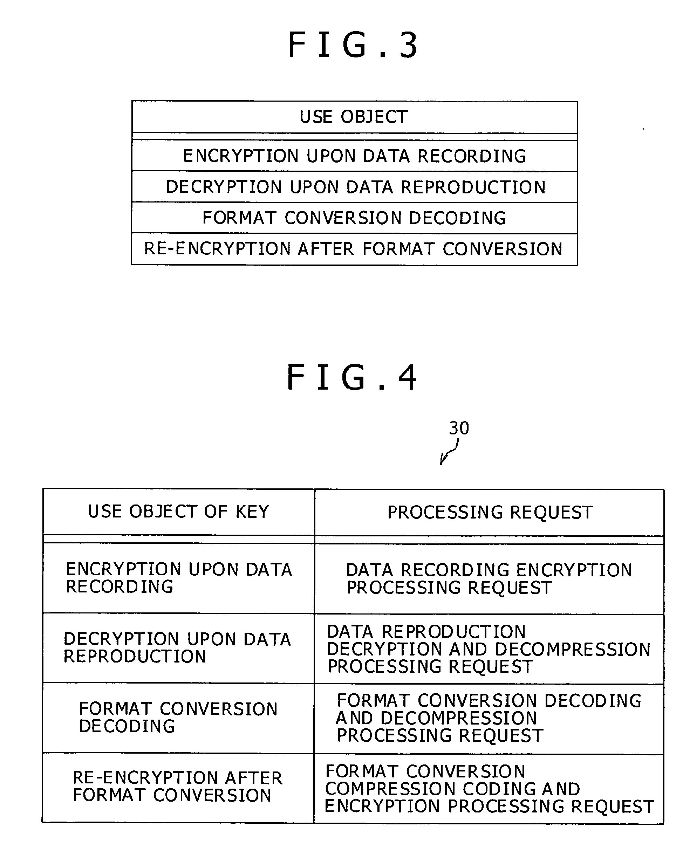

If utilization right information is provided from the central processing unit 5 to the security processing section 21, then the security processing section 21 examines the validity of the utilization right information (that is, detects presence or absence of falsification) based on electronic signature information which is part of the utilization right information. If the security processing section 21 confirms the validity of the utilization right information provided thereto from the central processing unit 5, then the security processing section 21 produces key data to be used for encryption or decryption conforming to the substance of the process to be performed for encrypted music data or compression coded music data of an object of processing at the point of time based on key source data included in the utilization information in response to the processing substance notification information. Further, the security processing section 21 produces use object information (hereinafter referred to as key use object information) representative of a use object (hereinafter referred to as key use object) of the key data in accordance with the processing substance represented by the processing substance notification information at the point of time. Here, as seen in FIG. 3, as the key use object, for example, four objects are available including an object of "encryption upon data recording" which indicates use for encryption upon recording of compression coded music data, another object of "decryption upon data reproduction" which indicates use for decryption upon reproduction of encrypted music data, a further object of "format conversion decoding" which indicates use for decryption upon conversion of the compression coding format of encrypted music data of an object of transfer, and a still further object of "re-encryption after format conversion" which indicates use for re-encryption after the conversion of the compression coding format of the encrypted music data of the object of transfer. After the security processing section 21 produces key use object information together with key data in this manner, it adds the key use object information to the key data to produce processing use information and signals the processing use information to the key buffer memory 22 so as to be stored temporarily.

Further, the central processing unit 5 actually reads out encoded music data or compression coded music data of an object of processing from the hard disk drive 10 or another recording medium and transfers the read out music data to the data buffer memory 19 of the data processing circuit 12 so as to be temporarily stored into the data buffer memory 19. Then, after the codec processing section 24 of the recording and reproduction apparatus 1 is placed into a state wherein it can start codec processes of encrypted music data or compressed coded music data, then the central processing unit 5 signals control information (hereinafter referred to as processing request) for requesting execution of codec processes for the encrypted music data or compressed coded music data of an object of processing at the point of time to the key confirmation section 23 of the data processing circuit 12.

The key confirmation section 23 retains such a key confirmation coordination table 30 as illustrated in FIG. 4 wherein processing requests provided from the central processing unit 5 and key use objects of key data used in the codec processes according to such processing requests are coordinated with each other in advance. Incidentally, in the key confirmation coordination table 30 illustrated in FIG. 4, for example, the key use object of "encryption upon data recording" is coordinated with a "data recording encryption processing request" to be used to record compression coded music data. The key use object of "decryption upon data reproduction" is coordinated with a "data reproduction decryption and decompression processing request" to be used to reproduce encoded music data. The key use object of "format conversion decoding" is coordinated with a "format conversion decoding and decompression processing request" to be used to convert the compression coding format of the encoded music data of an object of transfer is converted. Further, the key use object of "re-encryption after format conversion" is coordinated with a "format conversion compression coding and encryption processing request" to be used to convert the compression coding format of the encrypted music data of the object of transfer.

Accordingly, every time a processing request is received from the central processing unit 5, the key confirmation section 23 successively reads out key use object information included in processing use information from the key buffer memory 22 in the order in which the processing use information has been temporarily stored. Then, the key confirmation section 23 selects a key use object corresponding to the processing request at the present point of time from within the key confirmation coordination table 30 and compares the selected key use object with the key use object indicated by the key use object information read out from the key buffer memory 22. If the compared key use objects coincide with each other and therefore the key data used for the codec processes requested from the central processing unit 5 then is top key data which can be read out from the key buffer memory 22 at the present point of time, then the key confirmation section 23 provides the processing request received from the central processing unit 5 to the codec processing section 24.

If the key data is confirmed by the key confirmation section 23 and a processing request is issued from the key confirmation section 23, then the codec processing section 24 reads out the key data included in the top processing use information which can be read out at the current point of time from the key buffer memory 22. Further, the codec processing section 24 reads out encoded music data or compression coded music data of an object of processing from the data buffer memory 19 through the key confirmation section 23. Consequently, the codec processing section 24 suitably uses the key data read out from the key buffer memory 22 to perform codec processes according to the processing request for the encoded music data or compression coded music data read out from the data buffer memory 19.

In particular, if the processing request received from the central processing unit 5 is the "data recording encryption processing request" to be used to record compression coded music data, then the codec processing section 24 encrypts the compression coded music data read out from the data buffer memory 19 and signals resulting encrypted music data to the data buffer memory 19 through the key confirmation section 23 so as to be temporarily stored into the data buffer memory 19. Then, the central processing unit 5 reads out the encrypted music data from the data buffer memory 19 and transfers the encrypted music data to the hard disk drive 10 together with corresponding utilization right information. On the other hand, if the processing request received from the central processing unit 5 is, for example, the "data reproduction decoding and decompression process" to be used to reproduce encrypted music data, then codec processing section 24 decrypts and decompresses the encrypted music data read out from the data buffer memory 19 and signals resulting music data to the sound processing section 13 at the following stage.

Incidentally, if a request to transfer encrypted music data to an external apparatus is issued from the user, then the central processing unit 5 signals the "format conversion decryption and decompression processing request" and the "format conversion compression coding and re-encryption processing request" as processing requests successively to the key confirmation section 23 of the data processing circuit 12. Accordingly, thereupon, the key confirmation section 23 first confirms whether the key use object of the key data which can be read out first from the key buffer memory 22 in response to the processing request is the "format conversion decoding" corresponding to the "format conversion decoding and decompression processing request". Thereafter, the key confirmation section 23 confirms whether the key use object of the key data which can be read out subsequently from the key buffer memory 22 is the "re-encryption after format conversion" corresponding to the "format conversion compression coding and re-encryption processing request". If the key confirmation section 23 confirms that the key data which can be read out from the key buffer memory 22 is the key data used for codec processes in accordance with the processing request, then the codec processing section 24 first decrypts the encrypted music data read out from the data buffer memory 19 once and then decompresses and compression codes music data obtained by such decryption and decompression processes, whereafter it encrypts the compression coded music data. Then, when the codec processing section 24 acquires the encrypted music data whose compression coding format is converted, the codec processing section 24 signals the encrypted music data to the data buffer memory 19 through the key confirmation section 23 so as to be temporarily stored into the data buffer memory 19. As a result, the central processing unit 5 reads out the encrypted music data whose compression coding format is converted from the data buffer memory 19 and transfers the encrypted music data to the external apparatus from the external apparatus interface 15.

The key buffer memory 22 of the data processing circuit 12 has a storage capacity set so as to be able to temporarily store at least two different pieces of processing use information. Then, the central processing unit 5 signals utilization light information to the security processing section 21 of the data processing circuit 12 prior to the codec processes for encrypted music data or compression coded music data. Accordingly, the central processing unit 5 can control the security processing section 21 to produce key data to be used for encryption or decryption in advance so that the key data is temporarily stored into the key buffer memory 22.

In addition, where one encrypted music data or compression coded music data of an object of processing is to be codec processed solely or when encrypted music data or compression coded music data at the top of a plurality of encrypted music data or compression coded music data of an object of processing is to be codec processed, when a notification of completion of temporary storage into the key buffer memory 22 is received from the security processing section 21 of the data processing circuit 12, the central processing unit 5 decides that the codec processing section 24 has entered a state wherein new codec processes can be started. On the other hand, where encrypted music data or compression coded music data of a plurality of encrypted music data or compression coded music data of an object of processing other than the top encrypted music data or compression coded music data are to be codec processed, when a notification of completion of the codec processes for the immediately preceding encrypted music data or compression coded music data is received from the codec processing section 24, the central processing unit 5 decides that the codec processing section 24 has entered a state wherein new codec processes can be started. Then, after the central processing unit 5 decides that the codec processing section 24 has entered a state wherein new codec processes can be started in this manner, the central processing unit 5 signals a processing request to the key confirmation section 23 of the data processing circuit 12.

Accordingly, when the central processing unit 5 is to cause the data processing circuit 12 to perform codec processes for a plurality of encrypted music data or compression coded music data of an object of processing, it can signal a new processing request every time codec processes for one encrypted music data or compression coded music data are completed. Further, when a processing request is to be signaled to the data processing circuit 12, since the central processing unit 5 already produces key data to be used for codec processes according to the processing request and temporarily stores the key data, it can execute the codec processes for the encrypted music data or compression coded music data continuously without any waiting time.

If the key use objects compared with each other in order to confirm the key data to be used for the codec processes (that is, the key use object selected from within the key confirmation coordination table 30 and the key use object indicated by the key use object information read out from the key buffer memory 22) are different from each other, then the key confirmation section 23 of the data processing circuit 12 decides that the key data to be used for the codec processes at this time is not the top key data which can be read out from the key buffer memory 22 at the present point of time. Then, the key confirmation section 23 notifies the central processing unit 5 that a processing request is not provided to the codec processing section 24 and codec processes according to such a processing request are not to be executed. Consequently, when a processing request is received from the central processing unit 5, for example, in a state wherein the same key data is used for both of encryption and decryption, even if another processing request different from a processing request of the central processing unit 5 is provided by a third party from the outside of the recording and reproduction apparatus 1 by interruption, the key confirmation section 23 of the data processing circuit 12 can prevent that codec processes according to the processing request provided by the interruption are executed using the key data.

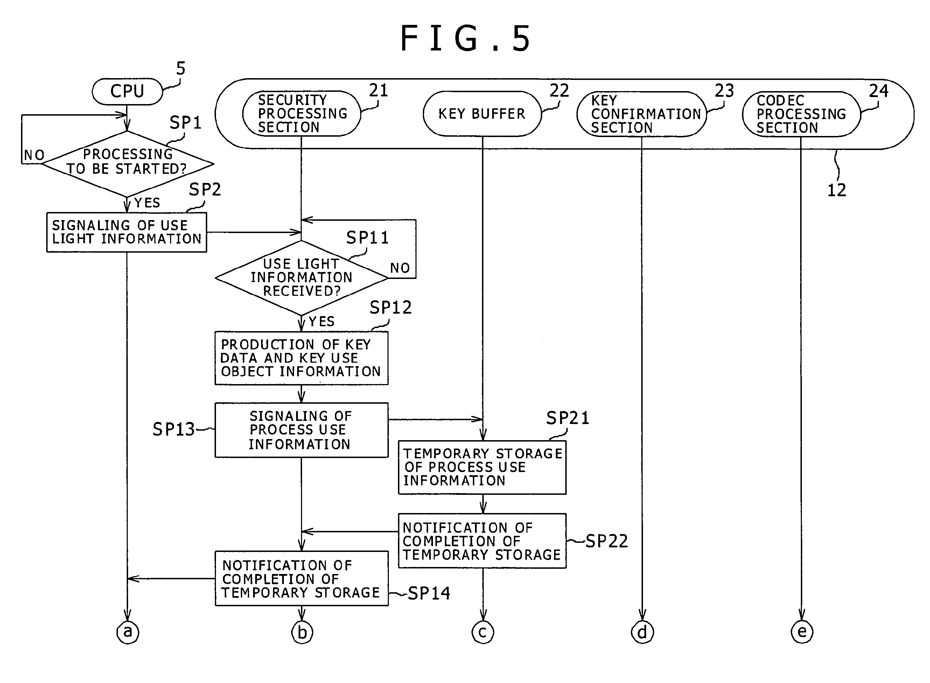

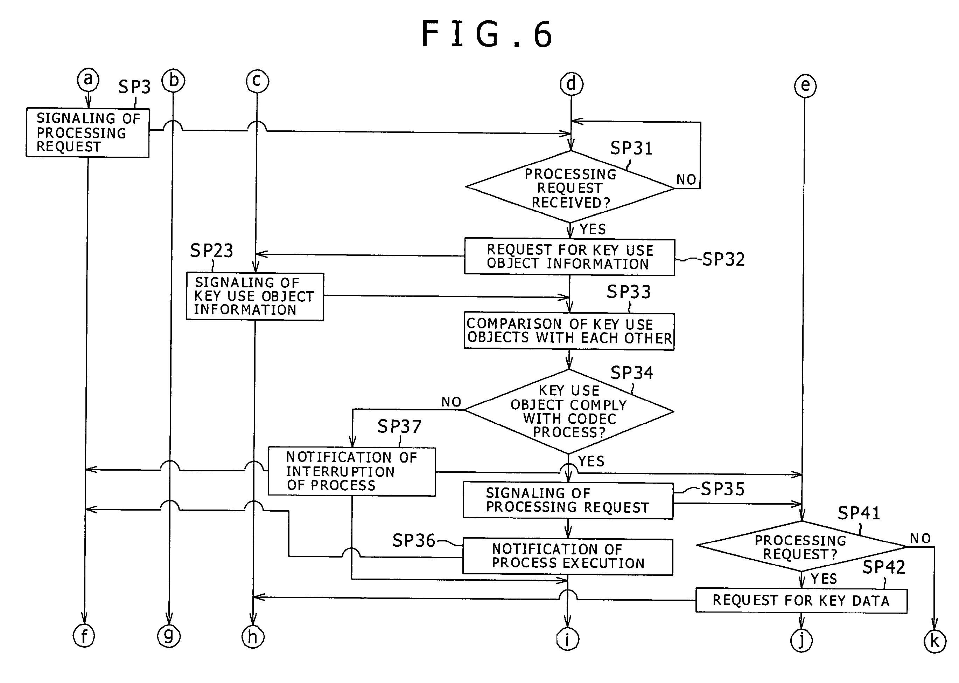

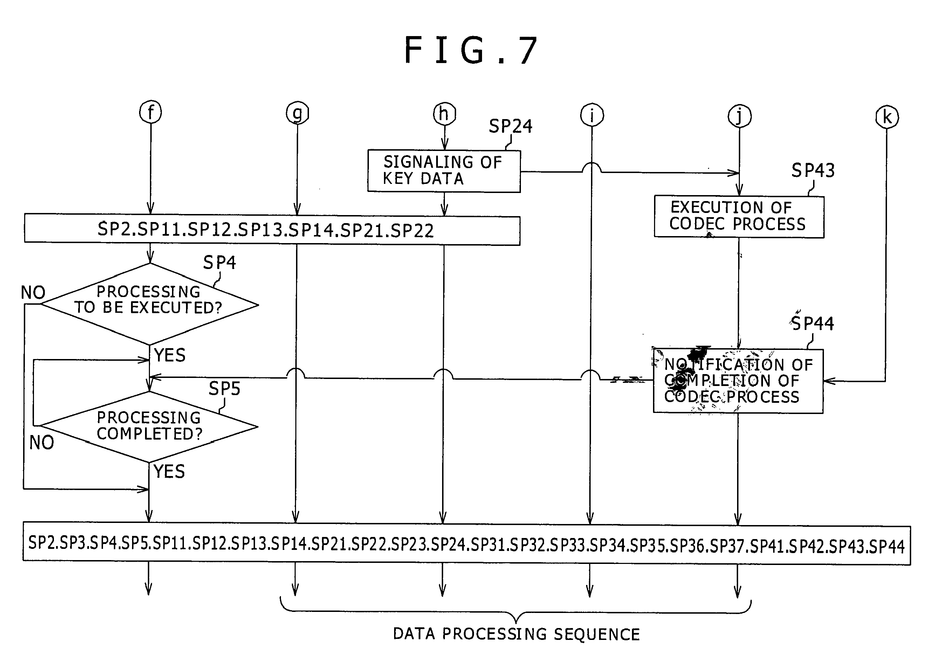

Now, processes of the central processing unit 5 and the data processing circuit 12 are described in detail with reference to sequence charts shown in FIGS. 5 to 7. First, after the recording and reproduction apparatus 1 is started up, the central processing unit 5 starts a recording and reproduction processing procedure in accordance with the recording and reproduction program stored in the ROM 6. After the recording and reproduction processing procedure is started, the central processing unit 5 waits at step SP1 that an operation input signal to start processing (that is, starting of reproduction, recording or transfer) is inputted by the user from an operation of the operation inputting section 2. Then, after an operation instruction signal for starting processing is inputted at step SP1, the central processing unit 5 advances the processing to step SP2. At step SP2, the central processing unit 5 transfers encrypted music data or compression coded music data of an object of processing to the data buffer memory 19 of the data processing circuit 12 so as to begin to be temporarily stored into the data buffer memory 19. Further, the central processing unit 5 signals utilization right information produced by the central processing unit 5 itself or read out from the hard disk drive 10 to the data processing circuit 12 together with the processing substance notification information representative of the substance of a process whose start is requested by the user to the data processing circuit 12. Thereafter, the central processing unit 5 advances the processing to step SP3.

At this time, the DSP 20 of the data processing circuit 12 executes a data processing sequence in accordance with the data processing program stored in advance in the internal memory. However, in the following, the data processing sequence executed by the DSP 20 is described as processes of the security processing section 21, key buffer memory 22, key confirmation section 23 and codec processing section 24 of the functional blocks. First, the security processing section 21 in the data processing circuit 12 starts a security processing procedure of the data processing sequence. After the security processing procedure is started, the security processing section 21 waits at step SP11 that utilization right information is signaled from the central processing unit 5 together with processing substance notification information. Then, after the security processing section 21 fetches the processing substance notification information and the utilization right information signaled from the central processing unit 5, it advances the processing to step SP12.

At step SP12, the security processing section 21 examines the validity of the utilization right information. Then, if the validity of the utilization right information is confirmed, then the security processing section 21 produces key data to be used for encryption or decryption conforming to the processing substance at the point of time based on the key source data included in the utilization right information in response to the processing substance notification information. Further, the security processing section 21 produces key use object information for the key data in accordance with the processing substance indicated by the processing substance notification information at the time, and then advances the processing to step SP13. Then at step SP13, the security processing section 21 adds the key use object information to the key data to produce processing use information and signals the processing use information to the key buffer memory 22, whereafter it advances the processing to step SP14.

At this time, the key buffer memory 22 fetches the processing use information signaled from the security processing section 21 to start a key data temporary storage processing procedure of the data processing sequence. After the key data temporary storage processing procedure is started, the key buffer memory 22 temporarily stores the processing use information at step SP21, and then advances the processing to step SP22 after the temporary storage is completed. Consequently, at step SP22, the key buffer memory 22 notifies the security processing section 21 of the completion of the temporary storage of the processing use information, whereafter the key buffer memory 22 advances the processing to step SP23. At this time, the security processing section 21 notifies, at step SP14, the central processing unit 5 of the completion of the temporary storage of the processing use information received from the key buffer memory 22, and then advances the processing to a next step.

At step SP3, the central processing unit 5 signals a processing request for encrypted music data or compression coded music data of an object of processing in response to the notification of the completion of the temporary storage of the processing use information received from the security processing section 21 to the key confirmation section 23 of the data processing circuit 12. At this time, the key confirmation section 23 in the data processing circuit 12 starts a key data confirmation processing procedure of the data processing sequence. After the key data confirmation processing procedure is started, the key confirmation section 23 waits at step SP31 that a processing request is signaled from the central processing unit 5. If the key confirmation section 23 fetches a processing request signaled from the central processing unit 5, then it advances the processing to step SP32. At step SP32, the key confirmation section 23 issues a request for key use object information included in the processing use information to the key buffer memory 22, and the advances the processing to step SP33.

At this time, the key buffer memory 22 signals, at step SP23, key use object information included in the processing use information which was temporarily stored earliest from within the processing use information temporarily stored at the present point of time (that is, included in the processing use information at the top in reading out) to the key confirmation section 23. Then, the key buffer memory 22 advances the processing to step SP24. Consequently, the key confirmation section 23 selects, at step SP33, a key use object corresponding to the processing request at the present point of time from within the key confirmation coordination table 30, and compares the selected key use object and the key use object represented by the key use object information read out from the key buffer memory 22 with each other. Thereafter, the key confirmation section 23 advances the processing to step SP34. At step SP34, the key confirmation section 23 decides based on a result of the comparison between the key use objects whether or not the key use object for the top key data which can be read out from the key buffer memory 22 at the present point of time is compatible with codec processes requested at the present point of time.

If an affirmative result is obtained at step SP34, then this represents that the key use object for the top key data which can be read out from the key buffer memory 22 at the present point of time is compatible with the codec processes requested at the present point of time. In other words, the affirmative result represents that the processing request at the present point of time is valid. Accordingly, in this instance, the key confirmation section 23 advances the processing to step SP35. At step SP35, the key confirmation section 23 signals the processing request provided at the present point of time from the central processing unit 5 to the codec processing section 24 to cause the codec processing section 24 to execute the codec processes according to the processing request, whereafter the key confirmation section 23 advances the processing to step SP36. At step SP36, the key confirmation section 23 notifies the central processing unit 5 that the codec processes are to be executed by the codec processing section 24, whereafter the key confirmation section 23 advances the processing to a next step.

On the other hand, if a negative result is obtained at step SP34, then this represents that the key use object for the top key data which can be read out from the key buffer memory 22 at the present point of time is not compatible with the codec processes requested at the present point of time. In other words, the negative result represents that, since the processing request at the present point of time is an illegal processing request inputted by a third party from the outside of the recording and reproduction apparatus 1, the key use object is not compatible with the codec processes because of an error in the recording and reproduction program or a failure of the recording and reproduction apparatus 1. Accordingly, at this time, the key confirmation section 23 advances the processing to step SP37. At step SP37, the key confirmation section 23 notifies the codec processing section 24 that the codec processes according to the processing request at the present point of time are stopped. Further, the key confirmation section 23 notifies the central processing unit 5 that the codec processes in accordance with according to the processing request at the present point of time by the codec processing section 24 are stopped, and then advances the processing to a next step bypassing the processes at steps SP35 to SP36.

At this time, the codec processing section 24 in the data processing circuit 12 starts a codec processing procedure of the data processing sequence. After the codec processing procedure is started, the codec processing section 24 decides at step SP41 whether or not a processing request is signaled from the key confirmation section 23. If an affirmative result is obtained at step SP41, then this represents that a processing request signaled from the key confirmation section 23 is fetched. In other words, the affirmative result represents that the codec processing section 24 is requested to execute codec processes according to the processing request at the present point of time. Accordingly, at this time, the codec processing section 24 advances the processing to step SP42.

Then at step SP42, the codec processing section 24 issues a request for key data included in the processing use information to the key buffer memory 22, and then advances the processing to step SP43. In this instance, the key buffer memory 22 signals key data included in the processing use information which was temporarily stored earliest from within the processing use information temporarily stored at the present point of time (that is, included in the processing use information at the top in reading out) to the codec processing section 24. Consequently, at step SP43, the codec processing section 24 reads out encrypted music data or compression coded music data of an object of processing from the data buffer memory 19 through the key confirmation section 23 and suitably uses the key data read out from the key buffer memory 22 to perform the codec processes according to the processing request for the encrypted music data or compression coded music data. Then, after the codec processes are completed, the codec processing section 24 advances the processing to step SP44. Consequently, at step SP44, the codec processing section 24 notifies the central processing unit 5 of the completion of the content processes, whereafter the codec processing section 24 advances the processing to a next step. On the other hand, if a negative result is obtained at step SP41, then this represents that a notification of stoppage of the code processes is issued from the key confirmation section 23. In other words, the negative result represents that a notification that the processing request at the present point of time from the key confirmation section 23 is illegal is received. Accordingly, at this time, the codec processing section 24 advances the processing to a next step.

Incidentally, if the central processing unit 5 receives a notification of execution or stoppage of codec processes by the codec processing section 24 from the key confirmation section 23, then the central processing unit 5 executes the processes at steps SP2, SP11, SP12, SP13, SP14, SP21 and SP22 described hereinabove together with the security processing section 21 and the key buffer memory 22. As a result, if the central processing unit 5 receives a notification of completion of temporary storage of processing use information from the security processing section 21, then it advances the processing to step SP4.

At step SP4, the central processing unit 5 decides whether or not codec processes according to the processing request at the present point of time are executed by the codec processing section 24. If an affirmative result is obtained at step SP4, then this represents that codec processes are currently executed by the codec processing section 24 in accordance with a legal processing request issued from the central processing unit 5. Accordingly, at this time, the central processing unit 5 advances the processing to step SP5. At step SP5, the central processing unit 5 waits that a notification of completion of the codec processes is received from the codec processing section 24. Then, if a notification of completion of the code processes is received from the codec processing section 24, then the central processing unit 5 advances the processing to a next step, at which it executes the processes at steps SP2, SP3, SP4, SP5, SP11, SP12, SP13, SP14, SP21, SP22, SP23, SP24, SP31, SP32, SP33, SP34, SP35, SP36, SP37, SP41, SP42, SP43 and SP44 described hereinabove together with the security processing section 21, key buffer memory 22, key confirmation section 23 and codec processing section 24 of the data processing circuit 12.

Incidentally, if a negative result is obtained at step SP4 described hereinabove, then this represents that the codec processes are stopped by the codec processing section 24 as a result of an input of an illegal processing request by a third party from the outside of the recording and reproduction apparatus 1. Accordingly, at this time, the central processing unit 5 advances the processing to a next step, at which it executes the processes at steps SP2, SP3, SP4, SP5, SP11, SP12, SP13, SP14, SP21, SP22, SP23, SP24, SP31, SP32, SP33, SP34, SP35, SP36, SP37, SP41, SP42, SP43 and SP44 together with the security processing section 21, key buffer memory 22, key confirmation section 23 and codec processing section 24 of the data processing circuit 12.

In this manner, the central processing unit 5 can control the data processing circuit 12 to produce key data and successively perform codec process of a plurality of encrypted m8usic data and compressed coded music data of an object of processing.

In the recording and reproduction apparatus 1 having the configuration described above, if a request to start codec processes is issued by the user, then the central processing unit 5 signals processing substance notification information representative of the processing substance of codec processes and utilization right information representative of the utilization right of encrypted music data or compression coded music data of an object of processing to the security processing section 21 of the data processing circuit 12. Then, in the recording and reproduction apparatus 1, the security processing section 21 produces key data to be used for encryption or decryption based on key source data included in the utilization right information and produces key use object information representative of a key use object of the key data based on the processing substance notification information. Then, the security processing section 21 temporarily stores the produced key data and key use object information as processing use information into the key buffer memory 22.

In this state, in the recording and reproduction apparatus 1, the central processing unit 5 signals a processing request for the encrypted music data or compression coded music data of the object of processing to the key confirmation section 23 of the data processing circuit 12. Consequently, in the recording and reproduction apparatus 1, the key confirmation section 23 confirms based on the processing request and the key use object represented by the key use object information in the key buffer memory 22 whether or not the key use object for the key data in the key buffer memory 22 is compatible with the codec processes in accordance with the processing request at the present point of time. Then, in the recording and reproduction apparatus 1, if the key use object is compatible with the codec processes, then the codec processing section 24 of the data processing circuit 12 reads out the key data from the key buffer memory 22 and executes the codec processes to encrypt or decrypt the encrypted music data or compression coded music data of the object of processing using the key data.

In this manner, in the recording and reproduction apparatus 1, where a plurality of encrypted music data or compression coded music data of an object of processing are codec processed, while the encrypted music data or compression coded music data of the processing object are codec processed by the codec processing section 24, utilization right information is signaled together with processing substance notification information from the central processing unit 5 to the security processing section 21 so that key data and key use object information are produced by the security processing section 21. The key data and the key use object information are temporarily stored as processing use information into the key buffer memory 22. Then, in the recording and reproduction apparatus 1, every time a processing request is received from the central processing unit 5, the key confirmation section 23 confirms whether or not the key use object for the key data in the key buffer memory 22 is compatible with the codec processes according to the processing request at the present point of time. Then, the codec processing section 24 reads out key data from the key buffer memory 22 in response to a result of the confirmation and executes the codec processes to encrypt or decrypt the encrypted music data or compression coded music data of the object of processing using the key data.

In the recording and reproduction apparatus 1 having the configuration described above, the security processing section 21 in the data processing circuit 12 produces key data and key use object information based on utilization right information provided thereto from the central processing unit 5 and temporarily stores the key data and the key use object information into the key buffer memory 22. Further, the key confirmation section 23 confirms based on a processing request received from the central processing unit 5 and the key use object for the key data in the key buffer memory 22 whether or not the key use object is compatible with the codec processes according to the processing request at the present point of time. Then, the codec processing section 24 reads out key data from the key buffer memory 22 in response to a result of the confirmation and encrypts or decrypts the encrypted music data or compression coded music data of the object of processing using the read out key data.

Accordingly, in the recording and reproduction apparatus 1, where a plurality of encrypted music data or compression coded music data of an object of processing are to be codec processed, while the security processing section 21 produces processing use information at an arbitrary timing asynchronous with the codec processes for a period of time corresponding to an amount of processing use information which can be temporarily stored in the key buffer memory 22, the codec processing section 24 can successively perform the data processes continuously for a plurality of encrypted music data or compression coded music data of an object of processing without waiting for a period of time of the production of the processing use information. Further, in the recording and reproduction apparatus 1, since key data is temporarily stored as processing use information to which the key use object information is added into the key buffer memory 22, even where a plurality of pieces of processing use information are temporarily stored into the key buffer memory 22, such a situation that a mismatch occurs with the key data to be used for the code processes of the encrypted music data or compression coded music data of the object of processing can be prevented substantially with certainty. As a result, such a situation that a processing result different from a processing result which should originally be obtained is obtained as a result of the codec processes and the codec processes prove fruitless can be prevented. Therefore, the recording and reproduction apparatus 1 can enhance the processing efficiency for encrypted music data or compression coded music data of an object of processing.

Further, in the recording and reproduction apparatus 1, every time a processing request is received from the central processing unit 5, the key confirmation section 23 confirms based on the processing request and a key use object of the key data in the key buffer memory 22 whether or not the key use object is compatible with the codec processes according to the processing request at the present point of time. If the key use object is not compatible with the codec processes according to the processing request at the present point of time, then the codec processes are stopped. Therefore, in the recording and reproduction apparatus 1, even if a request to use key data, which is used for original codec processes, in different codec processes having different processing substances is issued by a third party from the outside, illegal processing and utilization of encrypted music data or compression coded music data of an object of processing according to the request can be prevented with certainty.

Then, in the recording and reproduction apparatus 1, only if the central processing unit 5 issues a processing request to the key confirmation section 23, then the key confirmation section 23 uses the key confirmation coordination table 30 stored in advance therein to confirm whether the key use object of key data in the key buffer memory 22 is compatible with the codec processes according to the processing request at the present point of time. Therefore, in the recording and reproduction apparatus 1, even if a third party adds a key use object to an illegal processing request, illegal utilization of the encrypted music data or compression coded music data of the object of processing according to the illegal processing request can be prevented with a higher degree of certainty. Further, in the recording and reproduction apparatus 1, since such prevention of illegal utilization of encrypted music data or compression coded music data of an object of processing is implemented by the data processing circuit 12, increase of the processing load to the central processing unit 5 can be prevented by such prevention of illegal utilization.

Furthermore, in the recording and reproduction apparatus 1, since key data is produced in the DSP 20 of the data processing circuit 12 and is used for encryption and decryption of encrypted music data or compression coded music data of an object of processing without being taken outside, also illegal acquisition and utilization of the key data by a third party can be prevented.

It is to be noted that, in the embodiment described above, the central processing unit 5 provides only a processing request to the key confirmation section 23, and the key confirmation section 23 uses the key confirmation coordination table 30 together with the processing request to confirm whether or not the key use object of the key data in the key buffer memory 22 is compatible with the codec processes according to the processing request at the present point of time. However, the present invention is not limited to this, and a processing request to which key use object information is added may be provided from the central processing unit 5 to the key confirmation section 23 such that the key confirmation section 23 uses the key use information added to the processing request to confirm whether the key use object of the key data is compatible with the codec processes according to the processing request at the present point of time. Then in the recording and reproduction apparatus 1, where key use object information is added to a processing request in this manner, if individual identification information indicating that the processing request is issued by the central processing unit 5 or like information is added to the processing request, then illegal utilization of encrypted music data or compression coded music data of a processing object by a third party can be prevented.

Further, in the embodiment described hereinabove, the data processing circuit according to the present invention is applied to the data processing circuit 12 of a circuit board configuration which codec processes encrypted music data or compression coded music data described hereinabove with reference to FIGS. 1 to 7. However, the present invention is not limited this but can be applied widely to data processing circuits of various configurations like data processing circuits which apply data processes including at least an encryption process or a decryption process for various types of content data such as video data, photograph image data, text data and game programs or data processing circuits of a circuit board configuration which can be provided removably in a reproduction apparatus.

Further, in the embodiment described hereinabove, the reproduction apparatus according to the present invention is applied to the recording and reproduction apparatus 1 described hereinabove with reference to FIGS. 1 to 7. However, the present invention is not limited to this but can be applied widely to reproduction apparatus of various configurations such as personal computers, portable telephone sets, PDAs (Personal Digital Assistants), game machines, compact disk players, DVD (Digital Versatile Disk) players, Blu-ray disk players, HD-DVD (High Definition DVD) players, memory players, hard disk recorders and television receivers which include a data processing circuit.

Further, in the embodiment described above, the data processing program according to the present invention is applied to the data processing program stored in advance in the memory of the DSP 20 described hereinabove with reference to FIGS. 1 to 7. However, the present invention is not limited to this, but can be applied widely to data processing programs of various other configurations.

Further, in the embodiment described above, the data processing program according to the present invention is applied to the recording and reproduction program stored in advance in the ROM 6 or the hard disk drive 10 of the recording and reproduction apparatus 1 described hereinabove with reference to FIGS. 1 to 7 such that the central processing unit 5 of the recording and reproduction apparatus 1 executes the data recording and reproduction procedure described hereinabove with reference to FIGS. 5 to 7 in accordance with the recording and reproduction program and executes the recording and reproduction processing procedure described hereinabove with reference to FIGS. 5 to 7. However, the present invention is not limited to this, but may apply reproduction programs of various other configurations such that the reproduction processing procedure is executed by installing the program recording medium in which the reproduction program is stored into the recording and reproduction apparatus 1.

Further, in the embodiment described hereinabove, key data to be used for a data process of content data is produced based on utilization right information representative of the utilization right of the content data and the security processing section 21 which is one of the functions of the DSP 20 described hereinabove with reference to FIGS. 1 to 7 is applied as a right information processing section for adding a use object of key data for the utilization of the content data to the key data produced as described above. However, the present invention is not limited to this, but according to the present invention, various other right information processing section like a right information processing circuit of a hardware circuit configuration which produces, based on utilization right information representative of the utilization right of content data, key data to be used for data processing of the content data and adds a use object of the key data for utilization of the content data to the produced key data to produce processing use information.

Furthermore, in the embodiment described hereinabove, the buffer memory 22 which is one of the functions of the DSP 20 described hereinabove with reference to FIGS. 1 to 7 is applied as the temporary storage section for temporarily storing processing use information. However, the present invention is not limited to this, but various other temporary storage devices can be applied widely like a memory of a hardware circuit configuration which temporarily stores processing use information.

Further, in the embodiment described hereinabove, control information provided from the outside and a use object included in processing use information temporarily stored in the temporary storage section are compared with each other, and the key confirmation section 23 and the codec processing section 24 which are ones of the functions of the DSP 20 described hereinabove with reference to FIGS. 1 to 7 are applied as the data processing section for processing content data using key data included in the processing use information. However, the present invention is not limited to this, but according to the present invention, various other data processing sections can be applied widely like a data processing circuit of a hardware configuration which compares control information provided from the outside and a user object included in processing use information temporarily stored in the temporary storage section with each other and process content data using key data included in the processing use information in response to a result of the comparison.

Furthermore, in the embodiment described above, the central processing unit 5 described hereinabove with reference to FIGS. 1 to 7 is applied as the control section. However, the present invention is not limited to this, but various other control elements can be applied widely like a microprocessor.

Further, in the embodiment described hereinabove, the sound processing section 13 and the speaker 14 described hereinabove with reference to FIGS. 1 to 7 are applied as the reproduction section for reproducing content data outputted as a result of data processing from a data processing circuit. However, the present invention is not limited to this, and reproduction elements of various other configurations can be applied widely like a video processing circuit and a display circuit. Embodiments provide a data processing circuit and method which can process content data in an enhanced efficiency. A right information processing section produces, based on utilization right information which indicates a utilization right of content data, key data to be used for a data process of the content data and adds a use object of the key data for utilizing the content data to the produced key data to produce processing use information. A temporary storage section temporarily stores the processing use information. A data processing section compares control information supplied from the outside and the use object included in the processing use information temporarily stored in the temporary storage section and performs, in response to a result of the comparison, a data process for the content data using the key data included in the processing use information.

In so far as the embodiments of the invention described above are implemented, at least in part, using software-controlled data processing apparatus, it will be appreciated that a computer program providing such software control and a storage medium by which such a computer program is stored are envisaged as aspects of the present invention.
Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. A data processing circuit, comprising:
a right information processing section configured to produce, based on utilization right information which indicates a utilization right of content data, key data to be used for a data process of the content data and adding a use object of the key data for utilizing the content data to the produced key data to produce processing use information;
a temporary storage section configured to temporarily store the processing use information; and
a data processing section configured to compare control information supplied from the outside and the use object included in the processing use information temporarily stored in said temporary storage section and perform, in response to a result of the comparison, a data process for the content data using the key data included in the processing use information.

2. The data processing circuit according to claim 1, wherein said data processing section stores in advance therein a coordination table in which control information and use objects are coordinated with each other, selects that of the use objects which corresponds to the control information from within said coordination table, and compares the selected use object and the use object included in the processing use information temporarily stored in said temporary storage section with each other.

3. A reproduction apparatus, comprising:
a control section;
a data processing circuit including a right information processing section configured to produce, based on utilization right information which indicates a utilization right of content data, key data to be used for a data process of the content data and adding a use object of the key data for utilizing the content data to the produced key data to produce processing use information, a temporary storage section configured to temporarily store the processing use information, and a data processing section configured to compare control information supplied from said control section and the use object included in the processing use information temporarily stored in said temporary storage section and perform, in response to a result of the comparison, a data process for the content data using the key data included in the processing use information; and
a reproduction section configured to reproduce the content data processed by and outputted from said data processing circuit.

4. The reproduction apparatus according to claim 3, wherein said data processing section of said data processing circuit stores in advance a coordination table in which control information and use objects are coordinated with each other, selects that of the use objects which corresponds to the control information from within said coordination table, and compares the selected use object and the use object included in the processing use information temporarily stored in said temporary storage section with each other.

5. A data processing method, comprising the steps of:
producing, based on utilization right information which indicates a utilization right of content data, key data to be used for a data process of the content data and adding a use object of the key data for utilizing the content data to the produced key data to produce processing use information;
storing the processing use information temporary; and
comparing control information supplied from the outside and the use object included in the temporarily stored processing use information temporarily and performing, in response to a result of the comparison, a data process for the content data using the key data included in the processing use information.

6. The data processing method according to claim 5, wherein, at the step of data processing, from within a coordination table in which control information and use objects are coordinated with each other, that one of the use objects which corresponds to the control information supplied from the outside is selected, and the selected use object and the use object included in the temporarily stored processing use information are compared with each other.

7. A reproduction method, comprising the steps of:
causing, from within a data processing circuit including a right information processing section configured to produce, based on utilization right information which indicates a utilization right of content data, key data to be used for a data process of the content data and adding a use object of the key data for utilizing the content data to the produced key data to produce processing use information, a temporary storage section configured to temporarily store the processing use information, and a data processing section configured to compare control information supplied from a control section and the use object included in the processing use information temporarily stored in said temporary storage section and perform, in response to a result of the comparison, a data process for the content data using the key data included in the processing use information, said right information processing section to produce the key data based on the utilization right information of the content data and add the use object to the produced key data to produce the processing use information;
causing said data processing circuit to temporarily store the processing use information into said temporary storage section;
signaling the control information to said data processing circuit to cause said data processing section to compare the control information and the use object included in the processing use information temporarily stored in said temporary storage section with each other and perform, in response to a result of the comparison, a data process for the content data using the key data included in the processing use information; and
reproducing the content data processed by and outputted from said data processing circuit.

8. The reproduction method according to claim 7, wherein, at the step of data processing, said data processing section selects, from within a coordination table in which control information and use objects are coordinated with each other, that of the use objects which corresponds to the control information signaled to said data processing circuit, and compares the selected use object and the use object included in the processing use information temporarily stored in said temporary storage section with each other.

9. A storage medium in or on which a data processing program is stored, the data processing program causing a data processing circuit to execute processing, said program comprising the steps of:
producing, based on utilization right information which indicates a utilization right of content data, key data to be used for a data process of the content data and adding a use object of the key data for utilizing the content data to the produced key data to produce processing use information;
storing the processing use information temporary; and
comparing control information supplied from the outside and the use object included in the temporarily stored processing use information temporarily and performing, in response to a result of the comparison, a data process for the content data using the key data included in the processing use information.

10. A storage medium in or on which a reproduction program is stored, the reproduction program causing a reproduction apparatus to execute reproducing, said program comprising the steps of:
causing, from within a data processing circuit including a right information processing section configured to produce, based on utilization right information which indicates a utilization right of content data, key data to be used for a data process of the content data and adding a use object of the key data for utilizing the content data to the produced key data to produce processing use information, a temporary storage section configured to temporarily store the processing use information, and a data processing section configured to compare control information and the use object included in the processing use information temporarily stored in said temporary storage section and perform, in response to a result of the comparison, a data process for the content data using the key data included in the processing use information, said right information processing section to produce the key data based on the utilization right information of the content data and add the use object to the produced key data to produce the processing use information;
causing said data processing circuit to temporarily store the processing use information into said temporary storage section;
signaling the control information to said data processing circuit to cause said data processing section to compare the control information and the use object included in the processing use information temporarily stored in said temporary storage section with each other and perform, in response to a result of the comparison, a data process for the content data using the key data included in the processing use information; and
reproducing the content data processed by and outputted from said data processing circuit.
